# EUROPÄISCHE PATENTANMELDUNG

(11) **EP 1 234 631 A2**
(43) Veröffentlichungstag der Anmeldung: **28.08.2002**
(21) Anmeldenummer: 02003501.0
(22) Anmeldetag: 15.02.2002
(51) Int. Cl.: B23K 35/30, B23K 35/368

(54) **Fülldraht**

(30) Priorität: 17.02.2001 DE 10107537
(71) Anmelder: Castolin Eutectic International S.A., 1025 St. Sulpice (CH)
(72) Erfinder: Wabnegger, Johann, 1025 St. Sulpice (CH)
(74) Vertreter: Schön, Theodor, Patent- und Zivilingenieur

(57) **Zusammenfassung**

Die Füllung eines Fülldrahtes mit einem Band aus duktilen Kobaltlegierungen ist mit Hartstoffen gefüllt; die Füllung besteht in erster Linie aus Wolframkarbiden in verschiedenen Kornfraktionen und unterschiedlichem Aufbau, nämlich geschmolzen und gebrochen oder sphärisch geschmolzen sowie gesintert.

## Beschreibung

Die Erfindung betrifft einen Fülldraht aus einem Band, welches eine Füllung umgibt.

Das Fachbuch "Schützende Oberflächen durch Schweißen und Metallspritzen" aus dem Jahre 1969 beschreibt, dass mit Hartstoffen -- in erster Linie Wolframkarbiden in einer Grundmasse (Matrix) "verkittet" -- eine verschleißfeste Auftragung erreicht werden kann. Als Bindemittel sind angeführt Fe,Mo,Co,Ni. Gegenwärtig werden mit Metallpulver, beispielsweise WC in Kobaltmatrix durch Plasmapulverauftragsschweißungen gute Ergebnisse erzielt.

Stand der Technik ist, dass es auch Fülldrähte auf dem Markt gibt, bei denen die Hartstoffe in einem Mantel aus Eisen oder Nickel gefüllt sind (DE 40 08 091 A1).

Der Erfinder hat sich die Aufgabe gestellt, einen verbesserten Fülldraht zu schaffen als verschleißfeste Auftragung.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Zur Lösung dieser Aufgabe führt ein Fülldraht mit einem Band aus duktilen Kobaltlegierungen, das mit Hartstoffen gefüllt ist. Bevorzugte Kobaltlegierungen sind CoFe oder CoFeNi.

Die Füllung mit Hartstoffen besteht in erster Linie aus Wolframkarbiden in verschiedenen Kornfraktionen und unterschiedlichem Aufbau, nämlich geschmolzen und gebrochen oder sphärisch geschmolzen sowie gesintert (nicht umhüllt oder umhüllt beispielsweise mit Kobalt sowie Zusatzrohstoffen, die das Schweißen und das Nahtaussehen positiv beeinflussen.

Der Graddurchmesser beträgt vorteilhafterweise 1,6 mm, es ist aber auch möglich einen Durchmesser von 1,2 mm oder bis zu 3,2 mm als Fülldraht bzw. für Füllstäbe mit einem Durchmesser bis zu 8 mm herzustellen. Die Vorteile dieses neu entwickelten Fülldrahtes sind, dass man Neuteilaufschweißungen oder Reparaturausführungen mit gasgeschützten Fülldrähten ohne Schlacke einfach und schnell durchführen kann. Damit die Wolframkarbide nur in geringem Maß angeschmolzen werden und nicht komplett in Lösung gehen, ist das Mischverhältnis der verschiedenen Hartstoffe (WC), von Bedeutung.

Anwendungen sind Verschleißproblemfälle, wo es zu großer Abrasion bei gleichzeitig hoher Temperaturbeanspruchung kommt.

Vergleichsuntersuchungen bezüglich Zunderbeständigkeit zeigen bei Laboruntersuchungen große Vorteile gegenüber den klassischen FeCrC-Verschleißlegierungen bzw. Komplexlegierungen FeCrC mit Nb,Mo,W,V-Zusätzen, speziell bei Temperaturen über 650°.

## Patentansprüche

1. Fülldraht mit einem Band, welches eine Füllung umgibt, wobei das Band aus einer duktilen Kobaltlegierung besteht und der Fülldraht mit Hartstoffen gefüllt ist.

2. Fülldraht nach Anspruch 1 aus CoFe oder CoFeNi.

3. Fülldraht nach wenigstens einem weiteren der in der Beschreibung offenbarten Merkmale.
